# EUROPÄISCHE PATENTSCHRIFT

(11) **EP 3 434 594 B1**
(45) Veröffentlichungstag und Bekanntmachung des Hinweises auf die Patenterteilung: **08.12.2021**
(21) Anmeldenummer: 17182861.9
(22) Anmeldetag: 24.07.2017
(51) Int. Cl.: B64C 39/02, B64D 1/18

(54) **LACKIER-SYSTEM**
PAINTING SYSTEM
SYSTÈME DE PEINTURE

(43) Veröffentlichungstag der Anmeldung: 30.01.2019
(73) Patentinhaber: Woll, Bernhard, 71729 Erdmannhausen (DE)
(72) Erfinder: Woll, Bernhard, 71729 Erdmannhausen (DE)
(74) Vertreter: Patentanwaltskanzlei Cartagena

(56) Entgegenhaltungen:
- WO-A1-2015/162613
- DE-A1-102013 101 194
- DE-A1-102014 116 821
- DE-A1-102015 110 466
- ES-U- 1 185 483
- US-A1- 2015 274 294
- US-A1- 2016 082 460
- US-A1- 2016 364 989

## Beschreibung

### ANWENDUNGSGEBIET UND STAND DER TECHNIK

Die Erfindung betrifft ein Beschichtungssystem, insbesondere zum Aufbringen einer Grundierung, einer Farbe, eines Lacks oder einer Schutzschicht auf zu beschichtenden Oberflächen. Dabei geht es insbesondere um ein Beschichtungssystem zur Beschichtung von Oberflächen von Gebäuden, Windkraftanlagen, Schiffen und Flugzeugen.

Die Beschichtung, insbesondere die Lackierung, großer Strukturen stellt in der Praxis regelmäßig eine recht große Herausforderung dar. Bereiche, die vom Boden aus nicht erreichbar sind, bedürfen üblicherweise einer Einrüstung oder anderweitiger spezieller Arbeitsplattformen, damit die Aufbringung einer Beschichtung dann von dort aus erfolgen kann. Entsprechend aufwändig und teuer ist es beispielsweise, Schiffsrümpfe oder Flugzeugrümpfe neu zu lackieren.

Neben ästhetischen Aspekten ergibt sich der Bedarf einer Aufbringung einer Beschichtung und insbesondere auch der Bedarf, eine bestehende Beschichtung regelmäßig zu erneuern oder zu reparieren, aus technischen Gründen. So kann eine beschädigte und daher ausbesserungsbedürftige Oberfläche beispielsweise bei Windkraftanlagen deren Effizienz deutlich reduzieren, so dass es hier mitunter kurzfristig einer Neubeschichtung bedarf.

Relevante Dokumente des Standes der Technik sind die Dokumente US 2016/0082460 A1, US 2015/0274294 A1, US 2016/0364989 A1, DE 102014116821 A1, DE 102015110466 A1, ES 1185483 U, WO 2015/162613 A1 und DE 102013101194 A1.

Dabei schlagen die Dokumente US 2016/0082460 A1, DE 102015110466 A1 und US 2015/0274294 A1 Farbabgabe mittels eines unbemannten Flugobjektes vor, das derweil mittels eines Schlauches mit einem bodenseitigen Farbbehälterverbunden ist. Alternativ sieht US 2016/0082460 A1 jedoch auch den Einsatz von einem, von einem Anwender wohl mit der Hand austauschbaren, Farbkanister am Flugobjekt vor.

US 2016/0364989 A1 schlägt ein unbemanntes Flugobjekt und eine Basisstation hierfür vor, wobei die Basisstation auch zur Lagerung von Austauschbatterien vorgesehen sein kann.

### AUFGABE UND LÖSUNG

Aufgabe der Erfindung ist es, ein Beschichtungssystem zur Verfügung zu stellen, welches es gestattet, mit geringem Aufwand die Beschichtung von großen Oberflächen zu gestatten.

Hierfür wird ein Beschichtungssystem gemäß Anspruch 1 vorgeschlagen, welches u.a. die folgenden Merkmale aufweist.

Das Beschichtungssystem verfügt in bekannter Art und Weist über einen Tank zur Aufnahme von Beschichtungsflüssigkeit vor deren Ausbringung sowie über einen Applikator zum Austragen der Beschichtungsflüssigkeit, durch den hindurch vom Tank zugeführte Beschichtungsflüssigkeit auf eine zu beschichtende Oberfläche abgegeben wird. Zum Zwecke des Austrags von Flüssigkeit, die bei einer Temperatur oberhalb der Umgebungstemperatur ausgetragen werden soll, kann der Tank als thermisch isolierter Tank ausgebildet sein.

Der Applikator ist üblicherweise dafür ausgebildet, die aus dem Tank zugeführte Flüssigkeit, also eine Grundierungsflüssigkeit, eine flüssige Farbe oder Lack oder eine anderen zum Zwecke der Schichtbildung vorgesehene Flüssigkeit in Form eines ggf. zerstäubten Strahls auszutragen, gegebenenfalls unter Beimengung von Luft. Zur Förderung der Flüssigkeit vom Tank zum Applikator ist üblicherweise eine Pumpeinrichtung vorgesehen. Alternativ kann ein Druckspeicher mit einem Druckmedium vorgesehen sein, das die Flüssigkeit vom Tank zum Applikator und durch diesen hindurch in die Umgebung presst. Der Applikator verfügt über eine Austragöffnung, durch die hindurch die Beschichtungsflüssigkeit in die Umgebung abgegeben wird, wobei der Applikator vorzugsweise derart dimensioniert und relativ zum Rumpf angeordnet ist, dass die Austragöffnung und/oder die oben erläuterte Leiteinrichtung des Applikators und/oder eine Leiteinrichtung des Applikators zumindest partiell um mindestens 20 cm bezogen auf eine Horizontalebene von den Rotoren beabstandet ist. Das Fluggerät kann dadurch von der zu beschichtende Oberfläche einen ausreichenden Abstand halten und dennoch den Applikator nah an die Oberfläche führen, ohne dass die Kollisionsgefahr dadurch zu groß wird.

Das genannte Fluggerät ist in Art eines Hubschraubers ausgestaltet, also mit unmittelbar den Auftrieb erzeugenden Rotorblättern, wobei mindestens zwei Rotoren vorgesehen sind. Vorzugsweise handelt es sich um ein Fluggerät mit mehr als zwei Rotoren, da solche auch Drohnen oder Multikopter genannten Fluggeräte mit drei oder mehr Rotoren üblicherweise geeignet sind, durch eine entsprechende Regelung eine hohe Lagestabilität zu gewährleisten. Dies wird bereits mit einem Fluggerät mit vier Rotoren (Quadrocopter) erreicht, die paarweise gegenläufig drehen. Aufgrund der höheren Nutzlast und der hierdurch erzielbaren Redundanz wird eine Gestaltung des Fluggeräts mit sechs Rotoren (Hexacopter) oder acht Rotoren (Octocopter) jedoch bevorzugt.

Weiterhin verfügt das Beschichtungssystem über eine Basisstation, die als Landefläche für das Fluggerät dient und über einen mechanisch wirkenden Positionierungsmechanismus zur Gewährleistung einer Positionierung des gelandeten Fluggeräts in einer definierten Service-Stellung verfügt.

Die Basisstation und das Fluggerät verfügen gemäß einem ersten Aspekt der Erfindung über einen Fixierungsmechanismus, mittels dessen das Fluggerät im gelandeten Zustand gegen eine Vertikalverlagerung gesichert werden kann. Gemäß einem zweiten Aspekt der Erfindung verfügt die Basisstation über eine Mehrzahl von Wechselmodulen, die als Tankmodule, Energieversorgungsmodule, Treibstoffmodule oder Applikatormodule oder Kombinationen hiervon ausgebildet sind und die durch einen automatisierten Handhabungsmechanismus in eine Übergabelage verbringbar sind, aus der sie an den Rumpf des Fluggeräts ankoppelbar sind.

Das Fluggerät trägt sowohl den Applikator als auch den Tank sowie ggf. weitere erforderliche Komponenten zur Förderung der Flüssigkeit zum Applikator. Weiterhin umfasst das Fluggerät in der allgemein bekannten Weise die Motoren zum Antrieb der Rotoren sowie die zu deren Antrieb vorgesehene Energie und eine in einem Steuercomputer realisierte Fluglagesteuerung.

Ein solches Fluggerät als Teil eines Beschichtungssystems erreicht naturgemäß ohne Probleme Bereiche, die anderenfalls zur manuellen Führung eines Applikators eine mit erheblichem Aufwand anzubringende Arbeitsbühne und ggf. eine entsprechende Einrüstung erforderlich machen würde. Der niedrige Aufwand führt zu potentiell signifikant geringeren Kosten. Weiterhin entfallen auch vielfältige Gefahren, die mit Handhabung und Nutzung einer Einrüstung zum Zwecke der Aufbringung einer Beschichtung einhergehen.

Was die Kontrolle über das Fluggerät angeht, so kann diese mittels einer Fernsteuerung erfolgen, die manuell von einem am Boden befindlichen Fluggerätführer erfolgen. Bevorzugt ist allerdings eine autonome oder teilautonome Steuerung durch ein Autopilot-System, welches bei vorliegenden Daten über die beschichtende Fläche eigenmächtig die Flugroute festlegt. Das Fluggerät ist vorzugsweise in permanenter Funkverbindung mit der Basisstation, so dass das Autopilot-System nicht oder nicht vollständig durch den Steuercomputer des Fluggeräts gebildet sein muss, sondern partiell am Boden betrieben werden kann. Dennoch ist das Fluggerät vorzugsweise mit einem eigenen Steuercomputer und einer eigenen Fluglagesteuerung versehen. Weiterhin weist das Fluggerät vorzugsweise die bei heutigen Multikoptern üblichen Sensoren auf, beispielsweise Gyro-Sensoren, ein Magnetometer und/oder Beschleunigungssensoren zur Rotationsstabilisierung und Lagestabilisierung und/oder ein Barometerzur Höhenmessung sowie GPS.

Weiterhin zweckmäßig können Abstandsensoren sein, die horizontal und/oder in Richtung des Applikators ausgerichtet sind, um während des Austragvorgangs den Abstand zur zu beschichtenden Fläche präzise zu erfassen. Ein gleichbleibender Abstand zur zu beschichtende Oberfläche, der für einen idealen Austrag erforderlich ist, ist auf diese Weise zu erzielen.

Im genannten Tank führt das Fluggerät die auszubringende Beschichtungsflüssigkeit mit sich. Da der Inhalt des Tanks üblicherweise nicht ausreicht, um große Objekte vollständig mit der gewünschten Beschichtung zu versehen, ist das Fluggerät erfindungsgemäß in besonderer Art und Weise dafür ausgebildet, neue Beschichtungsflüssigkeit aufzunehmen.

Dies kann derart realisiert sein, dass der Tank dauerhaft am Fluggerät befestigt ist und das Fluggerät eine Befüllungsöffnung aufweist, über die der Tank im gelandeten Zustand des Fluggeräts nachfüllbar ist. Bei einer solchen Gestaltung verbleibt der Tank selbst üblicherweise am Fluggerät, auch wenn er zusätzlich abnehmbar oder wechselbar ausgebildet sein kann. Er ist im angebrachten Zustand nachfüllbar, vorzugsweise über eine am Tank vorgesehene Befüllungsöffnung, die bei außen am Fluggerät angebrachtem Tank unmittelbar zugänglich sein kann. Wenn die Befüllungsöffnung zur manuellen Befüllung vorgesehen ist, ist sie vorzugsweise an der Oberseite des Tanks bezogen auf die Normalstellung des Fluggeräts. Wenn eine automatisierte Befüllung beabsichtigt ist, so ist es von Vorteil, wenn die Befüllungsöffnung seitlich oder an der Unterseite des Tanks vorgesehen ist, so dass die Öffnung auf einfache Weise für einen bodenseitigen Abgabestutzen zugänglich ist, wenn das Fluggerät zum Zwecke der Aufnahme von neuer Flüssigkeit gelandet ist.

Alternativ oder zusätzlich kann vorgesehen sein, dass der Tank als Teil eines Wechseltankmoduls ausgebildet ist, das mittels einer automatisiert steuerbaren Kopplungseinrichtung am Rumpf des Fluggeräts ankoppelbar und hiervon abkoppelbar ist. Es ist demnach vorgesehen, dass der Tank als Teil eines Wechseltankmoduls ausgebildet ist, das bestimmungsgemäß zum Zwecke der Neubestückung des Fluggeräts mit Beschichtungsflüssigkeit ausgetauscht wird. Hierfür sind am Rumpf des Fluggeräts und am Wechseltankmodul Teilelemente einer gemeinsamen Kopplungseinrichtung vorgesehen, die einen automatisierten Wechsel gestatten.

Ähnlich dem Tank mit Beschichtungsflüssigkeit als Teil eines solchen Tankmoduls kann auch vorgesehen sein, dass der Applikator zum Austragen der Beschichtungsflüssigkeit als Teil eines wechselbar ausgestalteten Applikatormoduls am Fluggerät vorgesehen ist.

Dies gestattet es, den Applikator beispielsweise für unterschiedliche Beschichtungsanforderungen im Betrieb automatisch auszutauschen. So können unterschiedliche Öffnungswinkel eines durch den Applikator ausgetragenen Sprühstrahls für verschiedene Bereiche des gleichen Objektes geboten und durch unterschiedliche Applikatoren möglich sein. Insbesondere können auch unterschiedliche Applikatoren für unterschiedliche Beschichtungsflüssigkeiten oder Farben der auszutragenden Beschichtungsflüssigkeit verwendet werden, so dass auf einen in das Fluggerät integriertes Reinigungssystem verzichtet werden kann.

Die Kopplungseinrichtung, mittels derer das Applikatormodul am Rumpf des Fluggeräts ankoppelbar ist, kann ebenso wie die Kopplungseinrichtung für das oben beschriebene Tankmodul als automatisiert steuerbare Kopplungseinrichtung ausgebildet sein.

Alternativ kann auch vorgesehen sein, dass eine gemeinsame Kopplungseinrichtung für das Tankmodul sowie das Applikatormodul vorgesehen sind, so dass diese beiden Module ein gemeinsam ankoppelbares Modul bilden. Dies bietet sich insbesondere an, wenn in unmittelbarer Folge verschiedene Beschichtungsflüssigkeiten, beispielsweise Lacke unterschiedlicher Farbe oder eine Grundierung und ein Lack ausgebracht werden sollen.

Das Fluggerät ist zum Antreiben der Rotoren mit mehreren Motoren versehen, wobei es sich vorzugsweise um Elektromotoren handelt. In diesem Falle wird es als besonders vorteilhaft angesehen, wenn das das Fluggerät zum Zweck der Energieversorgung der Motoren über ein Energieversorgungsmodul zur Bereitstellung elektrischer Energie verfügt. Hierbei handelt es sich vorzugsweise um ein Energieversorgungsmodul mit Batterien oder Akkumulatoren. Grundsätzlich sind jedoch auch anderweitige Techniken wie insbesondere die Ausgestaltung mit einer Brennstoffzelle möglich.

Da vor einem Lackiervorgang nicht selten die Reinigung der zu lackierenden Oberfläche erforderlich ist, kann es von Vorteil sein, dass auch ein wechselbares Modul zur Abgabe von Reinigungsflüssigkeit und Lösungsmittel vorgesehen ist. Weiterhin ist auch ein wechselbares Modul mit einer Sandstrahleinreichung zweckmäßig, um eine zu lackierende Oberfläche vorzubereiten. Die genannten Module können vorzugsweise mittels einer automatisiert steuerbaren Kopplungseinrichtung angekoppelt und abgekoppelt werden. Vorzugsweise ist die Kopplungseinrichtung dabei identisch zu jener des kombinierten Tank- und Applikatormoduls ausgebildet, so dass das Fluggerät wahlweise in eine Konfiguration für die Vorbereitung der Oberfläche und für das Beschichten der Oberfläche gebracht werden kann.

Das genannte Energieversorgungsmodul ist vorzugsweise ebenfalls mittels einer automatisiert steuerbaren Kopplungseinrichtung am Rumpf des Fluggeräts ankoppelbar und hiervon abkoppelbar. So kann auch dieses im gelandeten Zustand des Fluggeräts automatisiert ausgetauscht werden.

Hierbei ist allerdings zu beachten, dass es als vorteilhaft angesehen wird, wenn das Fluggerät auch während des Wechsels des Energieversorgungsmoduls mit Strom versorgt ist, auch wenn es grundsätzlich denkbar erscheint, die Steuerelektronik des Fluggeräts erst nach Ankoppelung eines neuen Energieversorgungsmoduls neu zu starten. Um eine durchgehende Stromversorgung zu gewährleisten, sind verschiedene Möglichkeiten von Vorteil. So kann das Fluggerät mit einem zusätzlichen Stromspeicher versehen sein, um den Austausch des Energieversorgungsmoduls zu überbrücken. Weiterhin ist es auch möglich, das Fluggerät mit zwei oder mehr als Wechselmodulen ausgebildeten Energieversorgungsmodulen auszustatten, so dass eines angekoppelt bleiben kann, während ein anderes automatisiert ausgetauscht wird. Alternativ ist es auch möglich, das gelandete Fluggerät während des Austausches des Energieversorgungsmoduls von der Basisstation aus mit Strom zu versorgen. Bei einer solchen Gestaltung ist vorzugsweise vorgesehen, dass das Fluggerät nach unten weisende Kontaktflächen aufweist, zu denen korrespondierend auch Kontaktflächen an der Basisstation vorgesehen sind, so dass die Stromversorgung alleine durch die Landung des Fluggeräts und ggf. eine darauf folgende Positionierung gewährleistet ist.

Von besonderem Vorteil ist es, wenn das Energieversorgungsmodul gemeinsam mit dem wechselbaren Tankmodul als einheitliches Tank- und Energieversorgungsmodul ausgebildet ist. Dies gestattet es, mit einem einzigen Austausch eines Moduls das Fluggerät mit einem aufgefüllten Tank mit Beschichtungsflüssigkeit einerseits und einer aufgefüllten Energieversorgung andererseits auszurüsten. Insbesondere können hierbei das Volumen des Tanks und die Speicherkapazität der Energieversorgung aufeinander abgestimmt sein, so dass unter Zugrundelegung des typischen Verbrauchs der Tank und die Energieversorgung in etwa zeitgleich entleert sind.

Auch bei einer Ausgestaltung, bei der das Applikatormodul und das Tankmodul in oben beschriebener Weise als ein gemeinsam ankoppelbares Modul ausgebildet sind, kann dieses gemeinsame Modul zusätzlich als Energieversorgungsmodul ausgestaltet sein.

Wenngleich ein elektrischer Antrieb derzeit als vorteilhaft angesehen wird, ist grundsätzlich auch eine Ausgestaltung möglich, bei der das Fluggerät über mindestens einen Verbrennungsmotor zum Antrieb der Rotoren oder zum Antrieb eines Generators zur Erzeugung von elektrischer Energie verfügt. Der Vorteil einer solchen Ausgestaltung liegt in der höheren Energiedichte von Treibstoff gegenüber üblichen Batterien und Akkumulatoren.

Bei einer solchen Gestaltung kann die Treibstoffversorgung analog zu den Möglichkeiten der Ausgestaltung des Tanks erfolgen, also über ein Treibstoffmodul zur Versorgung des Verbrennungsmotors mit Treibstoff, welches entweder mittels einer automatisiert steuerbaren Kopplungseinrichtung am Rumpf des Fluggeräts ankoppelbar und/oder hiervon abkoppelbar ist oder welches dauerhaft am Fluggerät verbleibt, wobei das Fluggerät eine Befüllungsöffnung aufweist, über die der das Treibstoffmodul im gelandeten Zustand der Fluggeräts nachfüllbar ist.

Wie beschrieben sind die verschiedene Module, die als getrennte oder teilweise oder vollständig zusammenfasste Module ausgebildet sein können, mittels einer vorzugsweise automatisiert steuerbaren Kopplungseinrichtung am Rumpf des Fluggerätes ankoppelbar.

Die Kopplungseinrichtungen, mittels derer je nach Ausgestaltung das Applikatormodul, das Tankmodul, das Energieversorgungsmodul oder auch andere Verbrauchsmittel oder Wechselkomponenten tragende Module ausgetauscht werden, ist vorzugsweise für ein automatisiertes Trennen und/oder Ankoppeln ausgebildet. Hierdurch ist die Realisierung eines weitgehend autonomen Beschichtungssystems möglich, welches keinen oder nur geringen menschlichen Eingriff während der Erfüllung seiner Aufgaben benötigt.

Durch automatisiertes Trennen kann ein zuvor an den Rumpf nach Landung des Fluggeräts angekoppeltes Modul gelöst werden, so dass dieses anschließend durch ein anderes Modul ersetzt werden kann. Das Lösen kann durch einen Aktor des Fluggeräts selbst oder durch einen Aktor der Basisstation erfolgen. Auch eine Kombination ist möglich, bei der es einer Kraftbeaufschlagung einer Komponente der Kopplungseinrichtung auf Seiten des Fluggeräts durch einen fluggerät-externen Abschnitt bedarf, damit die Kopplungseinrichtung aus einem Kopplungszustand in einen Freigabezustand überführbar ist. Bei einer solchen Gestaltung ist ein Aktor des Fluggeräts, der zum Lösen der Kopplungseinrichtung vorgesehen ist, nur im gelandeten Zustand des Fluggeräts hierzu in der Lage, da bis zum Eingriff des fluggerät-externen Abschnittes dies mechanisch vermieden wird. Durch eine solche Gestaltung wird dem Verlust eines Moduls im Flug durch einen Software-Fehler oder einen Bedienungs-Fehler entgegengewirkt.

Vorzugsweise ist vorgesehen, dass der genannte Applikator mit einer Leiteinrichtung versehen ist, um hierdurch Störungen eines durch den Applikator ausgetragenen Beschichtungs-Sprühstrahls aufgrund durch die Rotoren bedingten Verwirbelungen zu vermindern. Die erfindungsgemäße Besonderheit gemäß diesem zweiten Aspekt der Erfindung liegt demnach darin, dass durch eine Leiteinrichtung verhindert wird, dass die an den Rotoren auftretenden Verwirbelungen den Sprühstrahl zu stark negativ beeinflussen.

Im einfachsten Falle kann es sich um ein Leitblech handeln, welches jene Rotoren, die auf der gleichen Seite wie der Applikator angeordnet sind, gegenüber dem Applikator abschirmen. Ein solches Leitblech, welches vorzugsweise mindestens eine Größe von 200 cm² aufweist, ist vorzugweise unmittelbar benachbart zu einem Auslass des Applikators angeordnet.

Von besonderem Vorteil ist es, wenn die Leiteinrichtung in Form einer eine Austragachse des Applikators umgebenden Struktur ausgebildet ist, wobei es sich vorzugsweise um eine sich in Austragrichtung aufweitende Struktur in Art eines sich in Austragrichtung öffnenden Trichters handelt.

Durch eine solche Formgebung wird der ausgebrachte Sprühstrahl weitgehend vollständig vor störenden Luftbewegungen isoliert. Da solche auch anderweitig als durch die Rotoren verursacht sein können und insbesondere bei einer Verwendung des Fluggeräts in großen Höhen häufig sind, ist eine solche weitgehende Isolation von Vorteil. Die sich aufweitende Struktur ist vorzugsweise als leichtes Kunststoffteil ausgebildet. An der Austrittsseite beträgt die Querschnittsfläche dieser Struktur vorzugweise mindestens 100 cm².

Die sich aufweitende Struktur ist dabei bezogen auf das Fluggerät als Ganzes vorzugsweise derart angeordnet, dass ein distales Ende dieser Struktur annähernd bis an die zu beschichtende Oberfläche geführt werden kann, ohne dass die Rotoren oder andere Teile des Fluggeräts kollisionsgefährdet in Hinblick auf die Oberfläche sind.

Der genannte Applikator eines Fluggeräts gemäß dem ersten oder dem zweiten Aspekt der Erfindung ist vorzugsweise verlagerbar gegenüber dem Rumpf des Fluggeräts ausgebildet. Er kann insbesondere gegenüber einem Rumpf des Fluggeräts schwenkbeweglich ausgebildet sein, wobei insbesondere vorzugsweise der Applikator um einen horizontale Schwenkachse schwenkbeweglich ist, vorzugsweise um einen Winkel von mindestens 60°, insbesondere vorzugsweise von mindestens 80°, so dass der Applikator im Wesentlichen zwischen einer ersten Ausrichtung zur in etwa horizontalen Abgabe eines Sprühstrahls und einer zweiten Ausrichtung zur in etwa vertikalen Abgabe eines Sprühstrahls nach unten verschwenkbar ist.

Für die Verlagerung des Applikators gegenüber dem Rumpf ist ein Motor vorgesehen, der somit im Flug die Ausrichtung des Applikators ändern kann. Bei vertikalen erstreckten Oberflächen ist der Applikator vorzugsweise im Wesentlichen horizontal ausgerichtet, also zum Austrag eines im Mittel horizontalen Sprühstrahls ausgerichtet. Durch die Schwenkbeweglichkeit kann er demgegenüber nach unten verschwenkt werden, so dass das Fluggerät auch unter dem Fluggerät angeordnete Flächen beschichten kann. Im Idealfalle lässt sich der Applikator bis in einer vertikale Ausrichtung verschwenken, in der derAustrag von Beschichtungsflüssigkeit vertikal nach unten erfolgt.

Bei der Ausgestaltung mit einer dem Applikator zugeordneten Leiteinrichtung zur Verhinderung von Verwirbelungen aus Sprühstrahls ist es von Vorteil, wenn diese Leiteinrichtung ortsfest zum Applikator vorgesehen ist und somit gemeinsam mit diesem gegenüber dem Rumpf und den Rotoren des Fluggeräts verlagerbar ist.

Der Applikator ist vorzugsweise um nur eine Schwenkachse verschwenkbar, um in oben erläuterter Weise nach vorne und unten Beschichtungsflüssigkeit abgeben zu können. Zwar sind weitere Freiheitsgrade möglich, jedoch aufgrund der Beweglichkeit des Fluggerätes in der Luft in der Regel nicht erforderlich.

Das Fluggerät ist vorzugsweise mit einer Schichtdicken-Sensoreinheit zur berührungslosen Messung einer aufgebrachten Lackschicht ausgebildet, wobei diese Schichtdicken-Sensoreinheit entweder fest in den Rumpf des Fluggeräts integriert ist oder als Wechselmodul wechselbar angekoppelt. Das Fluggerät ist hierdurch selbststätig in der Lage, zu erkennen, ob die gewünschte Schichtdicke bereits erreicht ist. Eine solche Messung kann insbesondere mit dem Messprinzip der Ultraschallprüfung, der Lasermessung oder der Infrarotmessung erfolgen.

Weiterhin ist es von Vorteil, wenn das Fluggerät mindestens eine Kamera aufweist. Eine solche Kamera kann bei nicht-transparenten Beschichtungsflüssigkeiten ebenfalls herangezogen werden, um die aufgebrachte Schicht zu untersuchen, insbesondere um weiteren Beschichtungsbedarf zu ermitteln.

Die Kamera ist aufgrund der üblichen Austragrichtung in horizontaler Richtung vorzugsweise ebenfalls horizontal ausgerichtet. Sie kann jedoch auch mit dem Applikator gemeinsam oder unabhängig hiervon verschwenkbar sein.

Die Kamera kann bei einer bevorzugten Gestaltung insbesondere auch der Lagesteuerung des Fluggeräts dienen, insbesondere während des Austrags von Beschichtungsflüssigkeit. Durch Analyse des Kamerabildes der Zielfläche, welche aus kurzer Distanz aufgenommen ist, kann die Fluglagesteuerung des Fluggeräts den Flüssigkeitsaustrag örtlich sehr präzise erfolgen lassen.

Wenn die Schichtdicken-Sensoreinheit Teil eines Sensor-Wechselmoduls ist, welches mittels einer automatisiert steuerbaren Kopplungseinrichtung am Rumpf des Fluggeräts ankoppelbar und/oder hiervon abkoppelbar ist, erlaubt es dies, dieses Modul nicht permanent am Fluggerät angekoppelt zu halten. Dies ist insbesondere von Vorteil, wenn das Modul mittels einer Kopplungseinrichtung am Fluggerät angekoppelt ist, die jener des Tankmoduls oder des Applikatormoduls entspricht, so dass hierzwischen ein Austausch stattfinden kann.

Durch den Austrag von Beschichtungsflüssigkeit wird ein Rückstoß bewirkt. Die Fluglagesteuerung ist dafür ausgebildet, dies zu kompensieren, um einen im Wesentlichen gleichbleibenden Abstand des Fluggeräts gegenüber der zu beschichtenden Fläche zu ermöglichen. Bei nur geringem Impuls reicht es aus, wenn die bereits genannten für den Auftrieb verantwortlichen Rotoren diesen Impuls durch unterschiedliche Drehzahlen der Rotoren kompensieren. Vorteilhaft ist es jedoch, wenn das Fluggerät über einen gesonderten Applikationskompensatorzur Kompensation aufweist.

Hierbei sind verschiedene Bauweisen von Kompensationseinrichtungen möglich, wobei jeweils vorgesehen ist, dass diese zur nur temporären Aktivierung ausgebildet sind, um nur während des Flüssigkeitsaustrags eine kompensierende entgegengesetzte Kraftbeaufschlagung zu erzielen.

Von besonderem Vorteil ist die Verwendung eines Applikationskompensators in Art eines zusätzlichen Rotors, dessen Drehachse eine von einer Vertikalrichtung abweichende Ausrichtung aufweist. Dieser Rotor ist entsprechend der bevorzugten horizontalen Austragrichtung mit einer vorzugsweise ebenfalls horizontalen Drehachse versehen. Bei Verwendung eines schwenkbaren Applikators ist die Drehachse des Rotors vorzugsweise gemeinsam mit dem Applikator verschwenkbar.

Bei einer alternativen Gestaltung umfasst der Applikationskompensator eine gegenüber dem Rumpf verlagerbare, insbesondere verschwenkbare Leiteinrichtung, die durch Relativverlagerung gegenüber dem Luftstrom mindestens eines der Rotoren den zum Rotor strömenden Luftstrom oder den vom Rotor abgehenden Luftstrom zur Erzeugung eines Gegenimpulses umlenkt.

Vorzugweise verfügt das Fluggerät über ein Messsystem zum Messen der aus dem Tank ausgetragenen Flüssigkeitsmenge oder der im Tank noch befindlichen Flüssigkeitsmenge. Da vorzugsweise ein hoher Anteil der Zuladung des Fluggeräts durch den Inhalt des Tanks gebildet ist, ist es von Vorteil, wenn die Daten zur noch vorhandenen oder bereits ausgetragenen Flüssigkeitsmenge auch vom Steuercomputer für die Fluglagesteuerung herangezogen werden.

Erfindungsgemäß ist vorgesehen, dass das Beschichtungssystem über eine Basisstation verfügt, die als Start- und Landefläche für das Fluggerät dient. Diese Basisstation verfügt über einen definierten Landeplatz für das Fluggerät, der in verschiedener Art und Weise ausgebildet sein kann, um eine Versorgung des Fluggeräts nach Landung erfolgen zu lassen.

Zum Zweck der positionsgenauen Verbringung des Fluggeräts im Zuge der Landung in eine definierte Service-Stellung verfügt die Basisstation über einen mechanisch wirkenden Positionierungsmechanismus. Hierbei ist ein aktiver Mechanismus mit mindestens einem elektrisch betätigten Aktor, der dafür ausgebildet ist, das Fluggerät nach Landung zu verlagern. Dies kann in Art eines Greifers oder Schiebers erfolgen.

Vorzugsweise ist der Positionierungsmechanismus als passiver Positionierungsmechanismus ausgebildet und verfügt über gegenüber einer Vertikalrichtung schräggestellte Leitflächen zur Horizontalverlagerung des Fluggeräts während der Landung. Die Basisstation fängt bei dieser Gestaltung das Fluggerät gleichsam ein. Am Fluggerät sind definierte Abschnitte, die derart angeordnet sind, dass sie bestimmungsgemäß am Ende des Landevorgangs durch Abgleiten an den Leitflächen eine definierte Lage einnehmen.

Da der Kopplungsvorgang zum Ankoppeln der vorstehend genannten Module eine Kraftbeaufschlagung des Fluggeräts verursachen kann, verfügen die Basisstation und das Fluggerät gemäß dem genannten ersten Aspekt der Erfindung über einen Fixierungsmechanismus, mittels dessen das Fluggerät im gelandeten Zustand gegen eine Vertikalverlagerung in Folge einer solchen Kraftbeaufschlagung gesichert werden kann. Dieser Fixierungsmechanismus verfügt vorzugsweise, insbesondere auf Seiten der Basisstation, über mindestens ein verlagerbaren Sicherungselement, welches zum Zwecke der Sicherung des Fluggeräts mit einer Gegenfläche am Fluggerät in Eingriff gebracht werden kann, so dass das Fluggerät form- oder kraftschlüssig gehalten ist.

Die Basisstation dient insbesondere dem automatisierten Wechsel von Modulen des Fluggeräts gegen typgleiche Module. Auch ein Wechsel von nur fallweise benötigten Modulen, beispielsweise eines Applikatormoduls und eines Sensormoduls, die in unterschiedlichen Phasen Verwendung finden, kann auf der Basisstation automatisiert möglich sein.

Damit sichergestellt ist, dass die Module nicht durch eine Fehlfunktion in oben genannter Weise im Flug abgekoppelt werden, ist an der Basisstation vorzugsweise mindestens ein Abschnitt vorgesehen, der bei gelandetem Fluggerät derart mit mindestens einer Kopplungseinrichtung wechselwirkt, dass diese aus dem Kopplungszustand in den Freigabezustand überführbar ist.

Durch das mechanische Zusammenwirken dieses basisstationsseitigen Abschnitts und der Kopplungseinrichtung am Fluggerät wird es möglich, durch den Steuercomputer anschließend die Entkoppelung zu bewirken. In der Luft wäre dies bei dieser bevorzugten Gestaltung mechanisch unterbunden.

Sofern ein Tank-Modul oder ein Treibstoff-Modul zur Nachfüllung mit einer entsprechenden Öffnung versehen sind, weist die Basisstation vorzugsweise einen korrespondierenden Anschlussstutzen zur automatisierten Befüllung auf. Zum Nachladen der Batterie und/oder zum Betrieb des fluggerätseitigen Steuercomputers wird durch hierfür korrespondierend positionierte elektrische Kontaktflächen das Fluggerät vorzugsweise im gelandeten Zustand an die Stromversorgung der Basisstation angeschlossen.

Gemäß dem genannten zweiten Aspekt der Erfindung weist die Basisstation eine Mehrzahl von Wechselmodulen auf, die durch einen automatisierten Handhabungsmechanismus in eine Übergabelage verbringbar sind, aus der sie an den Rumpf des Fluggeräts ankoppelbar sind. Diese Module können als Tankmodule für das Beschichtungsmaterial, Batteriemodule oder Applikatormodule oder Kombinationen hiervon ausgebildet sind. Diese Module sind an der Basisstation in einem Magazin gelagert, welches vorzugsweise als Ganzes verlagerbar ist, beispielsweise in Art eines Revolvermagazins.

Die Basisstation kann vorzugsweise über einen Heizmechanismus verfügen, um das Beschichtungsmaterial auf einer zur Applikation geeigneten Temperatur zu halten. Hierdurch wird der zur ggf. erforderlichen Erwärmung erforderliche Energiebedarf des Fluggeräts nach dem Start reduziert. Dennoch kann auch das Fluggerät ein Heizelement zur Erhitzen der mitgeführten Beschichtungsflüssigkeit aufweisen.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt ein Ausführungsbeispiel eines erfindungsgemäßen Beschichtungssystems mit einer Basisstation und einem Fluggerät.
Fig. 2 bis 4 zeigen das Fluggerät des Beschichtungssystems von oben sowie aus zwei seitlichen Perspektiven.
Fig. 5A und 5B zeigen das Fluggerät während der Beschichtung eines Objektes.
Fig. 6A bis 6E zeigen das Beschichtungssystem einschließlich der Basisstation bei einer Landung und einem Start des Fluggeräts.
Fig. 7 zeigt eine exemplarische Ausgestaltung einer Basisstation von oben.
Fig. 8A und 8B zeigen eine alternative Gestaltung des Beschichtungssystems.

### DETAILLIERTE BESCHREIBUNG DER AUSFÜHRUNGSBEISPIELE

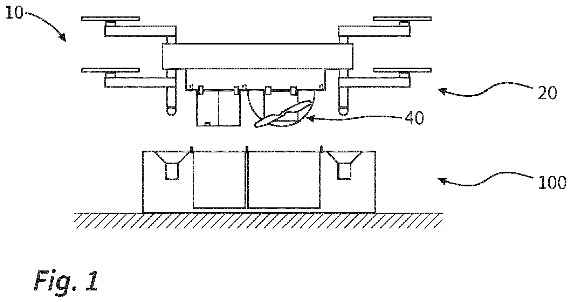

Fig. 1 zeigt ein erfindungsgemäßes Beschichtungssystem 10. Dieses verfügt über ein Fluggerät 20, an dem ein Applikatormodul 40 vorgesehen ist. Das Beschichtungssystem 10 verfügt weiterhin über eine Basisstation 100, die zur ortsfesten oder mobilen Aufstellung am Boden vorgesehen ist, die auch als Landeplattform für das Fluggerät 20 dient.

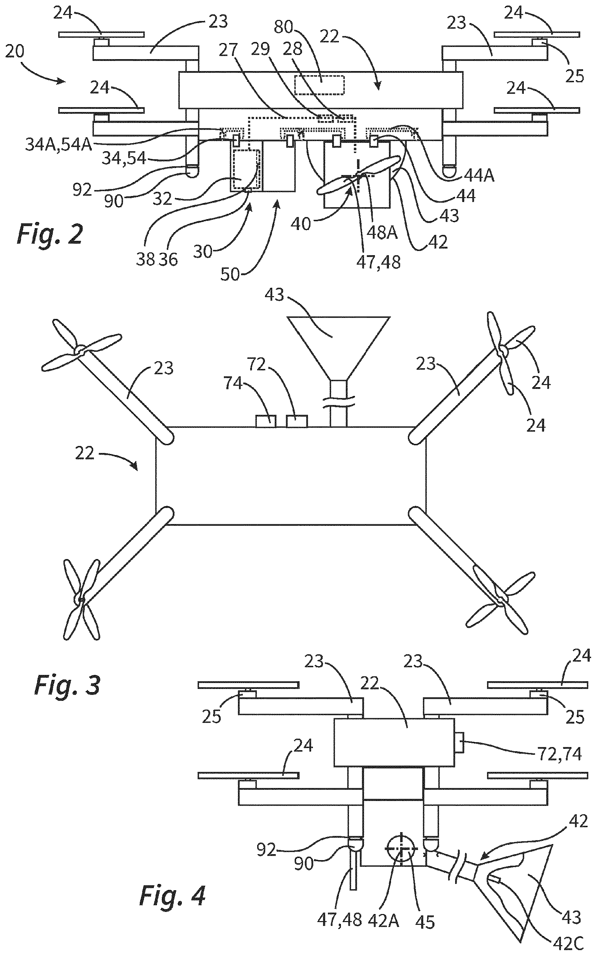

Anhand der Fig. 2 bis 4 sind in schematischer Art und Weise die Komponenten des Fluggeräts 20 näher erläutert.

Das Fluggerät ist als Oktokopter ausgebildet. Dies bedeutet, dass das Fluggerät insgesamt acht Rotoren aufweist, die angetrieben von jeweils eigene Elektromotoren 25 und angebracht an Auslegern 23, den für den Flug erforderlichen Auftrieb des Fluggeräts 20 bewirken. Das Fluggerät 20 verfügt über einen Rumpf, an dem neben den Auslegern 23 an der Unterseite verschiedene Module angebracht sind, die im Weiteren noch erläutert werden.

Weiterhin verfügt das Fluggerät 20 über insgesamt vier Landefüße 90.

Bei den genannten Modulen handelt es sich, je nach Konfiguration des Fluggeräts, um ein Tankmodul 30 zur Aufnahme der Beschichtungsflüssigkeit, um ein Energieversorgungsmodul 50 zur Aufnahme von Batterien oder Akkumulatoren, um ein Applikatormodul 40 zum Austrag der Beschichtungsflüssigkeit und, nicht jedoch bei dem in den Fig. 2 bis 4 dargestellten Ausführungsbeispiel, um ein Treibstoffmodul 60 zur Versorgung eines Verbrennungsmotors des Fluggeräts 20.

Bei der Konfiguration gemäß der Fig. 2 bis 4 ist ein gemeinsames Modul 30, 50 vorgesehen, welches das Tankmodul 30 für die Beschichtungsflüssigkeit und das Energieversorgungsmodul 50 zur Aufnahme von elektrisch gespeicherter Energie vereint. Dieses gemeinsame Modul 30, 50 ist mittels Kopplungseinrichtungen 34, 54 wechselbar am Rumpf 22 angekoppelt. Das Tankmodul 30 umfasst den Tank zur Aufnahme der Beschichtungsflüssigkeit, ein Messsystem 38 zur Erfassung des Füllstandes sowie eine Befüllungsöffnung 36, die üblicherweise von einem Rückschlagventil verschlossen ist. Das Applikatormodul 40, welches üblicherweise länger als in den Darstellungen abgebildet ausgebildet ist, umfasst den eigentlichen Applikator 42 zur Ausgabe der Flüssigkeit, der hierfür über eine Austragöffnung 42C verfügt. Der Applikator 42 ist von einer trichterartigen Leiteinrichtung 43 umgeben, die korrespondierend mit dem Öffnungswinkel des durch die Austragöffnung 42C abgegebenen Flüssigkeitsstrahls ausgerichtet ist. Das Applikatormodul 40 umfasst weiterhin einen Motor 45, beispielsweise einen Servomotor, um den Applikator 42 um die Achse 42A verschwenken zu können.

Auf der dem Applikator abgewandten Seite des Applikatormoduls 40 ist ein Applikationskompensator 47 in Form eines weiteren Rotors 48 vorgesehen.

Wie in Fig. 2 dargestellt ist, ist eine Verbindungsleitung 27 vorgesehen, die den Tank 32 mit dem Applikatormodul 40 verbindet und zur Speisung des Applikators 42 vorgesehen ist. Die Leitung ist mit einer Pumpeinrichtung 29 und einer Heizeinrichtung 28 versehen. Die Heizeinrichtung gestattet es, die aus dem Tank 32 mittels der Pumpeinrichtung 29 gepumpte Flüssigkeit vor dem Austrag zu erwärmen. Dies ist je nach Art der auszutragenden Beschichtungsflüssigkeit und/oder je nach Umgebungstemperatur geboten.

Das Fluggerät 20 ist dafür vorgesehen, großflächig Oberflächen zu beschichten, wobei verschiedene Arten der Beschichtung möglich sind, beispielsweise die Anbringung eines Farblacks, einer Grundierung oder auch die Aufbringung eines Korrosionsschutzmittels oder Korrosionsschutzwachses.

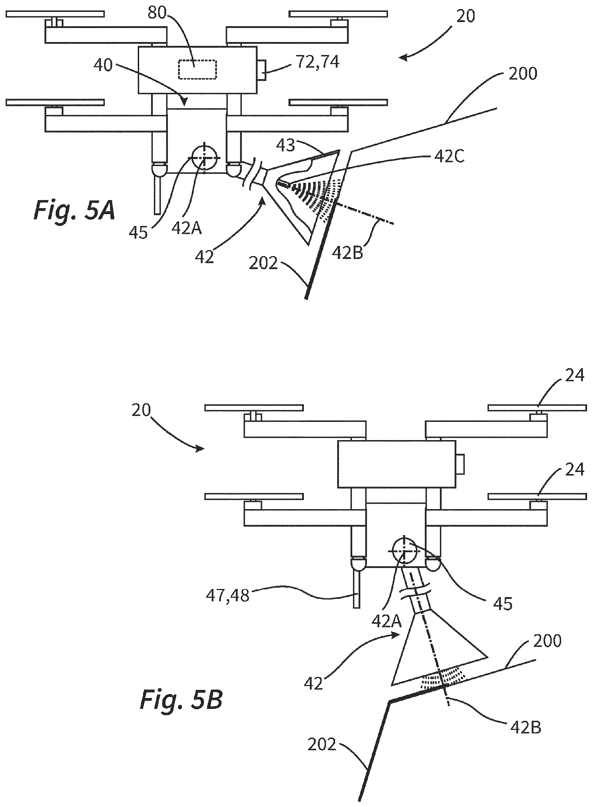

Die Verwendung des Fluggeräts 20 erfolgt, wie exemplarisch anhand der Fig. 5A und 5B verdeutlicht. In Fig. 5A ist dargestellt, wie das Fluggerät 20 mit dem Applikatormodul 40 eine Oberfläche 200 beschichtet, also beispielsweise eine Lackschicht 202 aufbringt. Hierfür wird die aus dem Tank 32 mittels der Pumpeinrichtung 29 zugeführte Flüssigkeit durch die Austragöffnung 42C in zerstäubter Form in Richtung der Austragachse 42B ausgetragen. Die Leiteinrichtung 43 in Form eines Trichters verhindert dabei, dass die von den Rotoren 24 bewirkte Luftbewegung den Sprühstrahl nennenswert stört. Auf diese Art und Weise ist eine präzise Beschichtung möglich.

Das Fluggerät 20 verfügt über eine Kamera 74 und eine Schichtdickensensoreinheit 72. Deren Ausgangssignale kann ein Steuergerät 80 während der Ausbringung der Beschichtungsflüssigkeit nutzen, um zu prüfen, ob die aufgebrachte Schicht den Anforderungen genügt bzw. um durch Auswertung eines Kamerabildes besonders präzise navigieren zu können.

Während des Austrags der Beschichtungsflüssigkeit wird der Rotor 48 aktiviert, um den durch den Austrag bewirkten Impuls zu kompensieren. Zwar ist dies grundsätzlich auch mit den Auftriebsrotoren 24 möglich. Hierfür müsste das Fluggerät 20 jedoch in eine stärker gekippte Lage gebracht werden, was den Flüssigkeitsaustrag erschweren würde.

Fig. 5B zeigt, dass bei geänderter Ausrichtung der zu beschichtenden Oberfläche 200 das Fluggerät 20 durch ein Neuausrichten des Applikators 42 gewährleistet, dass der Beschichtungsauftrag weiterhin in idealem Winkel und geschützt gegenüber der verwirbelten Luft der Rotoren 24 bewirkt wird.

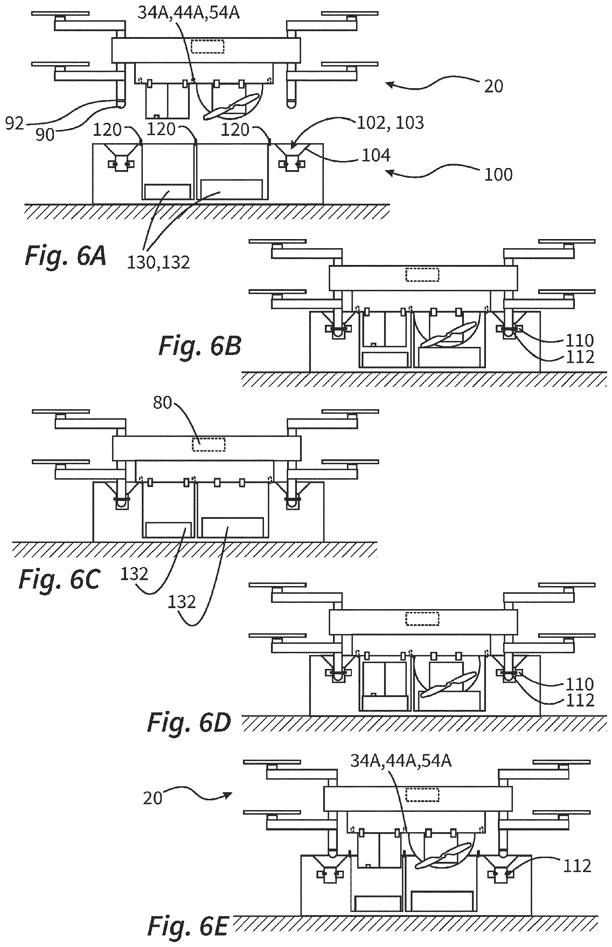

Die Fig. 6A bis 6E verdeutlichen eine Zwischenlandung des Fluggeräts 20 zum Zwecke der Auffrischung der Betriebsmittel.

Fig. 6A zeigt das Fluggerät 20 im Landeanflug. Durch eine nicht dargestellte nach unten gerichtete Kamera oder aber anderweitige Navigations- und Positionierungsmechanismen positioniert sich das Fluggerät 20 oberhalb der Basisstation 100 und senkt dann die Flughöhe. Hierbei gelangen die Landefüße 90 bestimmungsgemäß in Eingriff mit einem Positionierungsmechanismus 102, der in Art eines Trichters geformt ist. Die den Trichter bildenden Leitflächen 104 sind entsprechend schräggestellt, so dass auch bei gegebener Ungenauigkeit des Anflugs durch das Fluggerät 20 in der durch Fig. 6B verdeutlichten Weise eine präzise vorbestimmte Position eingenommen werden kann.

Beim Landen tauchen die Module 30, 50, 40 in an der Basisstation 100 vorgesehene Schächte ein und sind dann oberhalb von im Weiteren noch erläuterten Magazinen 132 angeordnet. Sobald die Landefüße 90 des Fluggeräts 20 ihre Sollposition erreicht haben, werden stiftförmige Sicherungselemente 112 eines Fixierungsmechanismus 110 radial ausgefahren, um im Zusammenwirken mit Gegenflächen 92 an den Landefüßen 90 das Fluggerät 20 vollständig zu fixieren, so dass es formschlüssig gegen ein Abheben gesichert ist.

In nicht näher dargestellter Art und Weise werden beim Landen elektrische Kontaktflächen an der Basisstation 100 und dem Fluggerät 20 miteinander in Verbindung gebracht, so dass das Steuergerät 80 des Fluggeräts 20 hierüber mit elektrischem Strom versorgt werden kann.

Weiterhin führt der Landevorgang dazu, dass an der Oberseite der Basisstation vorgesehene stiftförmige Abschnitte 120 mit hierfür vorgesehenen Komponenten 34A, 44A, 54A der Kopplungseinrichtungen 34, 44, 54 in Kontakt gelangen und hierdurch auf mechanische Art und Weise die Abkoppelbarkeit der Module 30, 50, 40 ermöglichen. Hierdurch ist es dem Steuergerät 80 oder einem basisstationsseitigen Steuergerät möglich, die Kopplungseinrichtungen 34, 44, 54 zu lösen, so dass sowohl das kombinierte Tankmodul und Energieversorgungsmodul 30, 50 als auch das Applikatormodul 40 ausgeklinkt werden und in ihr jeweiliges Magazin 132 fallen.

Durch Bewegung dieses Magazins 132 wird anschließend in der in Fig. 6D verdeutlichten Weise jeweils ein neues Modul 30, 40, 50 in eine Übergabelage unterhalb des Fluggeräts 20 verbracht und dort mittels eines nicht näher dargestellten Mechanismus angehoben, so dass ein Ankoppeln der Kopplungseinrichtungen 34, 44, 54 stattfindet. Vorzugsweise sind die Kopplungseinrichtungen 34, 44, 54 derart ausgebildet, dass alleine durch Andrücken des jeweiligen Moduls ein gekoppelter Zustand erzielt wird, insbesondere dadurch, dass die modulseitigen Elemente der Kopplungseinrichtung beim Andrücken an den Rumpf 22 unidirektional einrasten.

Wie in Fig. 6E dargestellt, kann nach Lösen der Sicherungselemente 112 das Fluggerät 20 erneut starten und den Beschichtungsauftragfortsetzen.

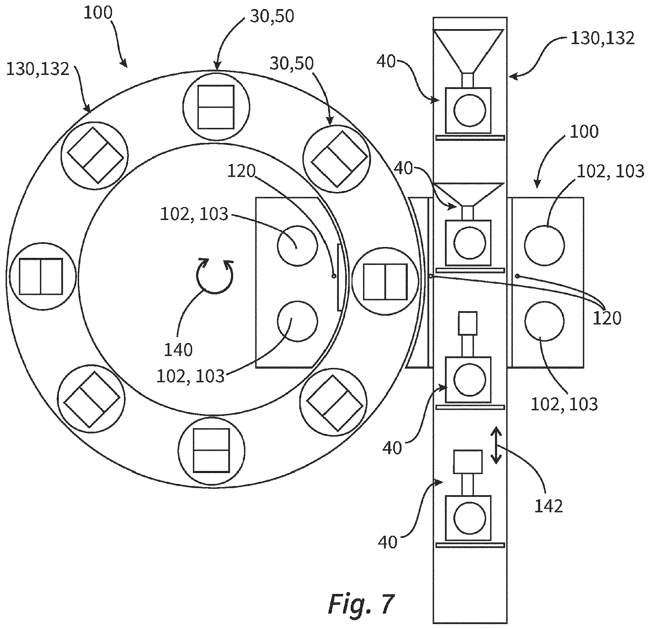

Fig. 7 zeigt in schematischer Darstellung die Basisstation 100 von oben. Es ist zu erkennen, dass die Magazine zur Aufnahme der kombinierten Tank- und Energieversorgungsmodule 30, 50 bzw. der Applikatormodule 40 vorliegend verschieden ausgestaltet sind. Das Magazin 132 für die kombinierten Module 30, 50 ist als Rotationsmagazin ausgebildet, während das Magazin 132 für die Applikatormodule 40 als linear ausgerichtetes Magazin 132 ausgebildet ist. Gemein ist den beiden Magazinen 132, dass sie jeweils beweglich ausgestaltet sind entsprechend der Pfeile 140, 142.

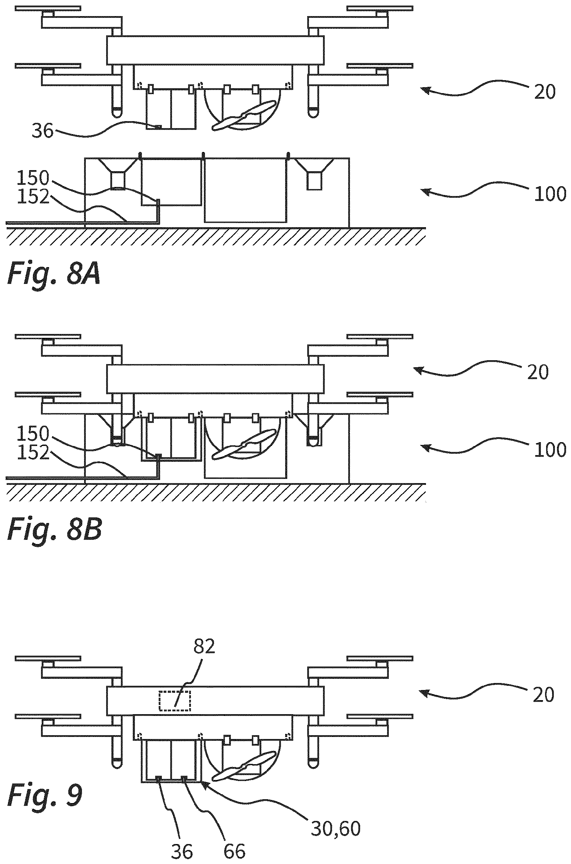

Die Fig. 8A und 8B sowie 9 zeigen geringfügig abgewandelte Variationen. Bei der Gestaltung der Fig. 8A und 8B ist eine zusätzliche oder alternative Möglichkeit der Nachbefüllung des Tanks 32 vorgesehen. Die Basisstation 100 verfügt hier über einen Füllabschnitt 150, der in ein Beschichtungsflüssigkeitsversorgungssystem 152 angeschlossen ist. Beim Landen des Fluggeräts 20 fährt dieser Abschnitt in die Befüllungsöffnung 36 des Fluggeräts 20 ein und öffnet dabei das hier vorgesehene Rückschlagventil. Anschließend kann ohne Wechsel des Moduls der Tank 32 neu befüllt werden.

Fig. 9 zeigte eine Variante, bei der ein ergänzender oder zusätzlicher Verbrennungsmotor 82 in der Drohne vorgesehen ist. Weiterhin ist bei dieser Ausgestaltung zur Versorgung des Verbrennungsmotors 82 ein Treibstoffmodul 60 vorgesehen, welches Teile eines einheitlichen Moduls 30, 50 für die Beschichtungsflüssigkeit und den Treibstoff ist. An der Unterseite dieses Moduls 30, 50 sind in diesem Fall jeweils Befüllungsöffnungen 36, 66 zum Zwecke der Nachbefüllung vorgesehen.

## Patentansprüche

1. Beschichtungssystem (10), insbesondere zum Aufbringen einer Grundierung, einer Farbe, eines Lacks oder einer Schutzschicht (202) auf Oberflächen (200) insbesondere von Gebäuden, Windkraftanlagen, Schiffen und Flugzeugen, mit den folgenden Merkmalen:
a. das Beschichtungssystem (10) verfügt über einen Tank (32) zur Aufnahme von Beschichtungsflüssigkeit vor deren Ausbringung, und
b. das Beschichtungssystem (10) verfügt über einen Applikator (42) zum Austragen der Beschichtungsflüssigkeit, durch den hindurch vom Tank (32) zugeführte Beschichtungsflüssigkeit auf eine zu beschichtende Oberfläche (200) abgegeben wird, und
c. das Beschichtungssystem umfasst ein unbemanntes Fluggerät (20) in Art eines Hubschraubers zur Abgabe der Beschichtungsflüssigkeit mit einem Rumpf (22) und mindestens zwei Rotoren (24), wobei der Tank (32) und der Applikator (42) an diesem Fluggerät (20) vorgesehen sind, und
d. zur Versorgung des Tanks (32) am Fluggerät mit Beschichtungsflüssigkeit ist vorgesehen,
- dass der Tank (32) dauerhaft am Fluggerät (20) befestigt ist und das Fluggerät (20) oder der Tank (32) eine im befestigten Zustand des Tanks zugängliche Befüllungsöffnung (36) aufweist, über die der Tank (32) im gelandeten Zustand des Fluggeräts (20) nachfüllbar ist, und/oder
- dass der Tank (32) als Teil eines Wechseltankmoduls (30) ausgebildet ist, das mittels einer automatisiert steuerbaren Kopplungseinrichtung (34) am Rumpf (22) des Fluggeräts (20) ankoppelbar und/oder hiervon abkoppelbar ist, und
e. das Beschichtungssystem verfügt über eine Basisstation (100), die als Landefläche für das Fluggerät (20) dient, und
**gekennzeichnet durch** die Merkmale:
f. die Basisstation (100) verfügt über einen mechanisch wirkenden Positionierungsmechanismus (102) zur Gewährleistung einer Positionierung des gelandeten Fluggeräts in einer definierten Service-Stellung, und
g. die Basisstation (100) und das Fluggerät (20) verfügen über einen Fixierungsmechanismus (110), mittels dessen das Fluggerät (20) im gelandeten Zustand gegen eine Vertikalverlagerung gesichert werden kann, und/oder die Basisstation (100) verfügt über eine Mehrzahl von Wechselmodulen, die als Tankmodule (30), Energieversorgungsmodule (50), Treibstoffmodule (60) oder Applikatormodule (40) oder Kombinationen hiervon ausgebildet sind und die durch einen automatisierten Handhabungsmechanismus (130) in eine Übergabelage verbringbar sind, aus der sie an den Rumpf des Fluggeräts ankoppelbarsind.

2. Beschichtungssystem (10) nach Anspruch 1 mit den folgenden zusätzlichen Merkmalen:
a. der Applikator (42) zum Austragen der Beschichtungsflüssigkeit ist als Teil eines wechselbar ausgestalteten Applikatormoduls (40) am Fluggerät (20) vorgesehen,
vorzugsweise mit dem folgenden zusätzlichen Merkmal:
b. das Applikatormodul (40) ist mittels einer automatisiert steuerbaren Kopplungseinrichtung (44) am Rumpf (22) des Fluggeräts (20) ankoppelbar und/oder hiervon abkoppelbar, wobei insbesondere vorzugsweise eine gemeinsame Kopplungseinrichtung zum gemeinsamen Wechsel des Wechseltankmoduls und des Applikatormoduls vorgesehen ist.

3. Beschichtungssystem (10) nach Anspruch 1 oder 2 mit den folgenden zusätzlichen Merkmalen:
a. das Fluggerät (20) verfügt zum Zwecke der Energieversorgung über ein Energieversorgungsmodul (50) zur Bereitstellung elektrischer Energie, und
b. das Energieversorgungsmodul (50) ist mittels einer automatisiert steuerbaren Kopplungseinrichtung (54) am Rumpf des Fluggeräts (20) ankoppelbar und/oder hiervon abkoppelbar,
vorzugsweise mit dem folgenden zusätzlichen Merkmal:
c. das Energieversorgungsmodul (50) ist gemeinsam mit dem wechselbaren Tankmodul (30) als einheitliches Tank- und Energieversorgungsmodul und/oder gemeinsam mit dem Applikatormodul als einheitliches Applikator- und Energieversorgungsmodul bzw. Tank-, Applikator- und Energieversorgungsmodul gestaltet, welches eine gemeinsame Kopplungseinrichtung (34, 54) zum gemeinsamen Wechsel des Energieversorgungsmoduls (50) einerseits und des Applikatormoduls und/oder des Tankmoduls (30) andererseits aufweist.

4. Beschichtungssystem (10) nach einem der Ansprüche 1 bis 3 mit den folgenden zusätzlichen Merkmalen:
a. das Fluggerät (20) verfügt über mindestens einen Verbrennungsmotor (82) zum Antrieb der Rotoren (24) oder zum Antrieb eines Generators zur Erzeugung von elektrischer Energie,
vorzugsweise mit dem zusätzlichen Merkmal
b. das Fluggerät verfügt über ein Treibstoffmodul (60) zur Versorgung des Verbrennungsmotors (82) mit Treibstoff, wobei das Treibstoffmodul (60) vorzugsweise
- mittels einer automatisiert steuerbaren Kopplungseinrichtung (64) am Rumpf (22) des Fluggeräts (20) ankoppelbar und hiervon abkoppelbar ist und/oder
- dauerhaft am Fluggerät (20) befestigt ist und das Fluggerät (20) eine Befüllungsöffnung (66) aufweist, über die das Treibstoffmodul (60) im gelandeten Zustand des Fluggeräts 20) nachfüllbar ist.

5. Beschichtungssystem (10) nach einem der vorstehenden Ansprüche mit dem folgenden zusätzlichen Merkmal:
a. der Applikator (42) ist mit einer Leiteinrichtung (43) versehen, um hierdurch Störungen eines durch den Applikator ausgetragenen Beschichtungs-Sprühstrahls aufgrund durch die Rotoren bedingten Verwirbelungen zu vermindern.

6. Beschichtungssystem (10) nach Anspruch 5 mit den folgenden zusätzlichen Merkmalen:
a. die Leiteinrichtung (43) ist in Form einer eine Austragachse (42B) des Applikators (42) umgebenden Struktur ausgebildet, wobei es sich vorzugsweise um eine sich in Austragrichtung aufweitende Struktur in Art eines sich in Austragrichtung öffnenden Trichters handelt.

7. Beschichtungssystem (10) nach einem der vorstehenden Ansprüche mit dem folgenden Merkmal:
a. derApplikator (42) ist gegenüber dem Rumpf (22) des Fluggeräts (20) schwenkbeweglich, insbesondere vorzugsweise mit dem folgenden zusätzlichen Merkmal:
b. der Applikator (42) ist um einen horizontale Schwenkachse (42A) schwenkbeweglich, vorzugsweise um einen Winkel von mindestens 60°, insbesondere vorzugsweise von mindestens 80°, so dass die Applikator (42) im Wesentlichen zwischen einer ersten Ausrichtung zur in etwa horizontalen Abgabe eines Sprühstrahls und einer zweiten Ausrichtung zur in etwa vertikalen Abgabe eines Sprühstrahls nach unten verschwenkbar ist.

8. Beschichtungssystem (10) nach einem der vorstehenden Ansprüche mit dem folgenden Merkmal:
a. das Fluggerät (20) ist mit einer Schichtdicken-Sensoreinheit (72) zur berührungslosen Messung einer aufgebrachten Lackschicht ausgebildet,
insbesondere vorzugsweise mit mindestens einem der folgenden zusätzlichen Merkmale:
b. die Schichtdicken-Sensoreinheit (72) arbeitet mit dem Messprinzip der Ultraschallprüfung, der Lasermessung oder der Infrarotmessung und/oder
c. die Schichtdicken-Sensoreinheit ist Teil eines Sensor-Wechselmoduls, welches mittels einer automatisiert steuerbaren Kopplungseinrichtung am Rumpf des Fluggeräts ankoppelbar und hiervon abkoppelbar ist, wobei die Kopplungseinrichtung vorzugsweise entsprechend der des Tankmoduls oder des Applikatormoduls ausgebildet ist, so dass das Sensor-Wechselmodul statt des Tankmoduls bzw. statt des Applikatormoduls an den Rumpf des Fluggeräts ankoppelbar ist.

9. Beschichtungssystem (10) nach einem der vorstehenden Ansprüche mit dem folgenden zusätzlichen Merkmal:
a. das Fluggerät (20) verfügt über einen Applikationskompensator (47) zur Kompensation eines durch Austrag von Beschichtungsflüssigkeit verursachten Impulses,
vorzugsweise mit einem der folgenden Merkmale:
b. der Applikationskompensator (47) ist in Art eines zusätzlichen Rotors (48) ausgebildet, dessen Drehachse (48A) eine von einer Vertikalrichtung (2) abweichende Ausrichtung aufweist, oder
c. der Applikationskompensator ist in Art einer gegenüber dem Rumpf verlagerbaren, insbesondere verschwenkbaren, Leiteinrichtung ausgebildet, die durch Relativverlagerung gegenüber dem Luftstrom mindestens eines der Rotoren den zum Rotor strömenden Luftstrom oder den vom Rotor abgehenden Luftstrom zur Erzeugung eines Gegenimpulses umlenkt.

10. Beschichtungssystem (10) nach einem der vorstehenden Ansprüche mit einem der beiden folgenden Merkmale:
a. der Positionierungsmechanismus ist als aktiver Positionierungsmechanismus ausgebildet und verfügt über mindestens einen elektrisch betätigten Aktor, der dafür ausgebildet ist, das Fluggerät nach Landung zu verlagern, oder
b. der Positionierungsmechanismus (102) ist als passiver Positionierungsmechanismus ausgebildet und verfügt über gegenüber einer Vertikalrichtung schräggestellte Leitflächen (104) zur Horizontalverlagerung des Fluggeräts (20) während der Landung.

11. Beschichtungssystem nach einem der vorstehenden Ansprüche mit mindestens einem der folgenden Merkmale:
a. der Fixierungsmechanismus (110) verfügt über ein automatisiert verlagerbares Sicherungselement (112), welches zum Zwecke der Sicherung des Fluggeräts mit einer Gegenfläche (92) am Fluggerät in Eingriff gebracht werden kann.

12. Beschichtungssystem nach einem der vorstehenden Ansprüche mit dem folgenden zusätzlichen Merkmal:
a. an der Basisstation ist ein Abschnitt (120) vorgesehen, der bei gelandetem Fluggerät (20) derart mit mindestens einer Kopplungseinrichtung (34, 44, 54) wechselwirkt, dass diese aus dem Kopplungszustand in den Freigabezustand überführbar ist.

13. Beschichtungssystem nach einem der vorstehenden Ansprüche mit mindestens einem der folgenden zusätzlichen Merkmale:
a. die mehreren Wechselmodule sind an der Basisstation (100) in einem beweglichen Magazin (132) angeordnet, vorzugsweise in einem Revolvermagazin, und/oder
b. die Basisstation (100) verfügt über einen Heizmechanismus zum Erwärmen des Inhalts von Wechseltankmodulen.

14. Beschichtungssystem nach einem der vorstehenden Ansprüche mit mindestens einem der folgenden Merkmale:
a. das Fluggerät (20) weist mindestens drei nach unten gerichtete Rotoren auf, insbesondere vier nach unten gerichtete Rotoren (Quadrocopter), sechs nach unten gerichtete Rotoren (Hexacopter) oder acht nach unten gerichtete Rotoren (Octocopter), und/oder
b. das Fluggerät (20) verfügt über ein Messsystem (38) zum Messen der aus dem Tank ausgetragenen Flüssigkeitsmenge oder der im Tank noch befindlichen Flüssigkeitsmenge, wobei vorzugsweise mittels dieses Messsystems gemessene Werte von der Software einer Fluglagesteuerung berücksichtigt werden, und/oder
c. der Tank (32) ist als thermisch isolierter Tank (32) ausgebildet und verfügt hierfür über eine isolierte Außenwandung, und/oder
d. das Fluggerät (20) verfügt über eine Heizeinrichtung (28) zur Erwärmung der Beschichtung vor dem Austrag und/oder
e. der Applikator (42) verfügt über eine Austragöffnung (42C), durch die hindurch die Beschichtungsflüssigkeit in die Umgebung abgegeben wird, wobei der Applikator (42) derart ausgestaltet oder angeordnet ist, dass die Austragöffnung (42C) und/oder eine Leiteinrichtung (43) des Applikators (42) um mindestens 20 cm bezogen auf eine Horizontalebene von den Rotoren (24) beabstandet ist, und/oder
f. das Fluggerät verfügt über mindestens eine Kamera (74), die zur Erfassung von zu beschichtenden Oberflächen horizontal ausgerichtet oder ausrichtbar ist, wobei eine Lagekontrollregelung des Fluggeräts (20) und/oder eine Steuerung des Austragvorgangs von einem Steuergerät (80) unter Berücksichtigung von Ausgangsdaten dieser Kamera (74) erfolgt.

## Claims

1. Coating system (10), in particular for applying a base coat, a paint, a lacquer or a protective layer (202) to surfaces (200), in particular of buildings, wind turbines, ships and aircraft, having the following features:
a. the coating system (10) has a tank (32) for holding coating liquid before it is discharged, and
b. the coating system (10) has an applicator (42) for dispensing the coating liquid, through which applicator coating liquid which is supplied from the tank (32) is output onto a surface (200) which is to be coated, and
c. the coating system comprises an unmanned aerial vehicle (20) in the form of a helicopter for outputting the coating liquid, said aerial vehicle having a fuselage (22) and at least two rotors (24), wherein the tank (32) and the applicator (42) are provided on this aerial vehicle (20), and
d. for supplying the tank (32) on the aerial vehicle with coating liquid, provision is made
- for the tank (32) to be permanently fastened to the aerial vehicle (20) and the aerial vehicle (20) or the tank (32) to have a filling opening (36) which is accessible in the fastened state of the tank and by means of which the tank (32) can be refilled in the landed state of the aerial vehicle (20), and/or
- for the tank (32) to be designed as part of an exchangeable tank module (30) which can be coupled to the fuselage (22) of the aerial vehicle (20) and/or can be uncoupled from said fuselage by means of a coupling device (34) which can be controlled in an automated manner, and
e. the coating system has a base station (100) which serves as a landing area for the aerial vehicle (20), and
**characterized by** the features:
f. the base station (100) has a mechanically acting positioning mechanism (102) for ensuring positioning of the landed aerial vehicle in a defined service position, and
g. the base station (100) and the aerial vehicle (20) have a fixing mechanism (110) by means of which the aerial vehicle (20) can be secured against vertical displacement in the landed state, and/or the base station (100) has a plurality of exchangeable modules which are designed as tank modules (30), energy supply modules (50), fuel modules (60) or applicator modules (40) or combinations thereof and which can be moved to a transfer position, from which they can be coupled to the fuselage of the aerial vehicle, by an automated handling mechanism (130).

2. Coating system (10) according to Claim 1, having the following additional feature:
a. the applicator (42) for dispensing the coating liquid is provided as part of an applicator module (40) of exchangeable configuration on the aerial vehicle (20),
preferably having the following additional feature:
b. the applicator module (40) can be coupled to the fuselage (22) of the aerial vehicle (20) and/or can be uncoupled from said fuselage by means of a coupling device (44) which can be controlled in an automated manner, wherein, in particular, a common coupling device for jointly exchanging the exchangeable tank module and the applicator module is preferably provided.

3. Coating system (10) according to Claim 1 or 2, having the following additional features:
a. the aerial vehicle (20) has, for the purpose of energy supply, an energy supply module (50) for providing electrical energy, and
b. the energy supply module (50) can be coupled to the fuselage of the aerial vehicle (20) and/or can be uncoupled from said fuselage by means of a coupling device (54) which can be controlled in an automated manner,
preferably having the following additional feature:
c. the energy supply module (50) is designed together with the exchangeable tank module (30) as an integral tank and energy supply module and/or together with the applicator module as an integral applicator and energy supply module or tank, applicator and energy supply module which has a common coupling device (34, 54) for jointly exchanging firstly the energy supply module (50) and secondly the applicator module and/or the tank module (30) .

4. Coating system (10) according to one of Claims 1 to 3, having the following additional feature:
a. the aerial vehicle (20) has at least one internal combustion engine (82) for driving the rotors (24) and/or for driving a generator for generating electrical energy, preferably having the additional feature:
b. the aerial vehicle has a fuel module (60) for supplying the internal combustion engine (82) with fuel, wherein the fuel module (60) preferably
- can be coupled to the fuselage (22) of the aerial vehicle (20) and can be uncoupled from said fuselage by means of a coupling device (64) which can be controlled in an automated manner, and/or
- is permanently fastened to the aerial vehicle (20) and the aerial vehicle (20) has a filling opening (66) by means of which the fuel module (60) can be refilled in the landed state of the aerial vehicle (20).

5. Coating system (10) according to one of the preceding claims, having the following additional feature:
a. the applicator (42) is provided with a guide device (43) in order to in this way reduce disturbance of a coating spray jet, which is dispensed by the applicator, on account of turbulence which is caused by the rotors.

6. Coating system (10) according to Claim 5, having the following additional feature:
a. the guide device (43) is designed in the form of a structure which surrounds a dispensing axis (42B) of the applicator (42), wherein said structure is preferably a structure which widens in the dispensing direction and is in the form of a funnel which opens in the dispensing direction.

7. Coating system (10) according to one of the preceding claims, having the following feature:
a. the applicator (42) can move in a pivoting manner in relation to the fuselage (22) of the aerial vehicle (20),
particularly preferably having the following additional feature:
b. the applicator (42) can move in a pivoting manner about a horizontal pivot axis (42A), preferably about an angle of at least 60°, particularly preferably of at least 80°, so that the applicator (42) can be pivoted downward substantially between a first orientation for approximately horizontally outputting a spray jet and a second orientation for approximately vertically outputting a spray jet.

8. Coating system (10) according to one of the preceding claims, having the following feature:
a. the aerial vehicle (20) is designed with a layer thickness sensor unit (72) for contactlessly measuring an applied layer of paint,
particularly preferably having at least one of the following additional features:
b. the layer thickness sensor unit (72) operates using the measurement principle of ultrasonic testing, laser measurement or infrared measurement, and/or
c. the layer thickness sensor unit is part of an exchangeable sensor module which can be coupled to the fuselage of the aerial vehicle and can be uncoupled from said fuselage by means of a coupling device which can be controlled in an automated manner, wherein the coupling device is preferably designed in accordance with that of the tank module or of the applicator module, so that the exchangeable sensor module can be coupled to the fuselage of the aerial vehicle instead of the tank module or instead of the applicator module.

9. Coating system (10) according to one of the preceding claims, having the following additional feature:
a. the aerial vehicle (20) has an application compensator (47) for compensating for a pulse which is caused by dispensing of coating liquid,
preferably having one of the following features:
b. the application compensator (47) is designed in the form of an additional rotor (48), the rotation axis (48A) of which has an orientation which differs from a vertical direction (2), or
c. the application compensator is designed in the form of a guide device which can be displaced, in particular can be pivoted, in relation to the fuselage and which, by relative displacement in relation to the air stream of at least one of the rotors, deflects the air stream flowing to the rotor or the air stream departing from the rotor for the purpose of generating a counterpulse.

10. Coating system (10) according to one of the preceding claims, having one of the two following features:
a. the positioning mechanism is designed as an active positioning mechanism and has at least one electrically operated actuator which is designed for displacing the aerial vehicle after landing, or
b. the positioning mechanism (102) is designed as a passive positioning mechanism and has guide areas (104), which are inclined in relation to a vertical direction, for horizontally displacing the aerial vehicle (20) during landing.

11. Coating system according to one of the preceding claims, having the following feature:
a. the fixing mechanism (110) has a securing element (112) which can be displaced in an automated manner and which can be made to engage with a mating area (92) on the aerial vehicle for the purpose of securing the aerial vehicle.

12. Coating system (10) according to one of the preceding claims, having the following additional feature:
a. a section (120) is provided on the base station, which section, when the aerial vehicle (20) is landed, interacts with at least one coupling device (34, 44, 54) in such a way that said coupling device can be moved from the coupling state to the release state.

13. Coating system (10) according to one of the preceding claims, having at least one of the following additional features:
a. the plurality of exchangeable modules are arranged on the base station (100) in a movable magazine (132), preferably in a turret magazine, and/or
b. the base station (100) has a heating mechanism for heating the contents of exchangeable tank modules.

14. Coating system (10) according to one of the preceding claims, having at least one of the following features:
a. the aerial vehicle (20) has at least three downwardly directed rotors, in particular four downwardly directed rotors (quadrocopter), six downwardly directed rotors (hexacopter) or eight downwardly directed rotors (octocopter), and/or
b. the aerial vehicle (20) has a measurement system (38) for measuring the quantity of liquid dispensed from the tank or the quantity of liquid still contained in the tank, wherein values which are measured by means of this measurement system are preferably taken into account by the software of an attitude controller, and/or
c. the tank (32) is designed as a thermally insulated tank (32) and to this end has an insulated outer wall, and/or
d. the aerial vehicle (20) has a heating device (28) for heating the coating before the application, and/or
e. the applicator (42) has a dispensing opening (42C) through which the coating liquid is output to the surrounding area, wherein the applicator (42) is configured or arranged in such a way that the dispensing opening (42C) and/or a guide device (43) of the applicator (42) are/is spaced apart from the rotors (24) by at least 20 cm with respect to a horizontal plane, and/or
f. the aerial vehicle has at least one camera (74) which is oriented or can be oriented horizontally for detecting surfaces which are to be coated, wherein position control of the aerial vehicle (20) and/or control of the dispensing process by a control device (80) are/is performed taking into account output data from this camera (74).

## Revendications

1. Système de revêtement (10), destiné notamment à l'application d'un apprêt, d'une peinture, d'une laque ou d'une couche de protection (202) sur des surfaces (200), notamment de bâtiments, d'éoliennes, de navires et d'avions, ledit système comportant les caractéristiques suivantes :
a. le système de revêtement (10) comporte un réservoir (32) destiné à recevoir le liquide de revêtement avant l'application de celui-ci, et
b. le système de revêtement (10) comporte un applicateur (42) qui est destiné à distribuer le liquide de revêtement et par le biais duquel le liquide de revêtement amené du réservoir (32) est délivré sur une surface (200) à revêtir, et
c. le système de revêtement comprend un engin volant sans pilote (20), du genre hélicoptère, destiné à délivrer le liquide de revêtement, ledit engin volant comportant un fuselage (22) et au moins deux rotors (24), le réservoir (32) et l'applicateur (42) étant prévus sur cet engin volant (20), et
d. pour alimenter le réservoir (32) de l'engin volant en liquide de revêtement il est prévu que
- le réservoir (32) est fixé à demeure sur l'engin volant (20) et l'engin volant (20) ou le réservoir (32) comporte une ouverture de remplissage (36) qui est accessible lorsque le réservoir est fixé et par le biais de laquelle le réservoir (32) est rechargeable lorsque l'engin volant (20) a atterri, et/ou
- le réservoir (32) fait partie d'un module réservoir interchangeable (30) qui peut être accouplé au fuselage (22) de l'engin volant (20) et/ou désaccouplé de celui-ci au moyen d'un dispositif d'accouplement (34) commandable automatiquement, et
e. le système de revêtement comporte une station de base (100) qui sert de zone d'atterrissage à l'engin volant (20), et
**caractérisé par** les caractéristiques suivantes :
f. la station de base (100) comporte un mécanisme de positionnement à action mécanique (102) destiné à garantir un positionnement de l'engin volant lorsqu'il a atterri dans une position de service définie, et
g. la station de base (100) et l'engin volant (20) comportent un mécanisme de fixation (110) au moyen duquel l'engin volant (20) peut être empêché de se déplacer verticalement lorsqu'il a atterri, et/ou la station de base (100) comporte un pluralité de modules interchangeables qui sont conçus comme des modules réservoirs (30), des modules d'alimentation en énergie (50), des modules de carburant (60) ou des modules applicateurs (40) ou des combinaisons de ceux-ci et qui peuvent être amenés par un mécanisme de manipulation automatique (130) dans une position de transfert à partir de laquelle ils peuvent être accouplés au fuselage de l'engin volant.

2. Système de revêtement (10) selon la revendication 1 comportant la caractéristique supplémentaire suivante :
a. l'applicateur (42) destiné à distribuer le liquide de revêtement fait partie d'un module applicateur interchangeable (40) au niveau de l'engin volant (20),
de préférence comportant la caractéristique supplémentaire suivante :
b. le module applicateur (40) peut être accouplé à la coque (22) de l'engin volant (20), et/ou désaccouplé de celui-ci ; au moyen d'un dispositif d'accouplement (44) à commande automatique, un dispositif d'accouplement commun étant de préférence prévu pour changer conjointement le module réservoir interchangeable et le module applicateur.

3. Système de revêtement (10) selon la revendication 1 ou 2 comportant les caractéristiques supplémentaires suivantes :
a. l'engin volant (20) comporte, pour fournir de l'énergie, un module d'alimentation en énergie (50) destiné à fournir de l'énergie électrique, et
b. le module d'alimentation en énergie (50) peut être accouplé au fuselage de l'engin volant (20), et/ou désaccouplé de celui-ci, au moyen d'un dispositif d'accouplement (54) à commande automatique,
de préférence comportant la caractéristique supplémentaire suivante :
c. le module d'alimentation en énergie (50) est conçu conjointement avec le module réservoir interchangeable (30) comme un module réservoir et d'alimentation en énergie standard et/ou conjointement avec le module applicateur comme module applicateur et d'alimentation en énergie ou module réservoir, applicateur et d'alimentation en énergie standard qui comporte un dispositif d'accouplement commun (34, 54) destiné à changer conjointement le module d'alimentation en énergie (50) d'une part et le module applicateur et/ou le module réservoir (30) d'autre part.

4. Système de revêtement (10) selon l'une des revendications 1 à 3 comportant la caractéristique supplémentaire suivante :
a. l'engin volant (20) comporte au moins un moteur à combustion interne (82) destiné à entraîner les rotors (24) ou à entraîner un générateur destiné à générer de l'énergie électrique,
de préférence comportant la caractéristique supplémentaire suivante
b. l'engin volant comporte un module de carburant (60) destiné à alimenter le moteur à combustion interne (82) en carburant, de préférence le module de carburant (60)
- peut être accouplé au fuselage (22) de l'engin volant (20), et désaccouplé de celui-ci, au moyen d'un dispositif d'accouplement (64) à commande automatique et/ou
- est fixé à demeure sur l'engin volant (20) et l'engin volant (20) comporte une ouverture de remplissage (66) par laquelle le module de carburant (60) peut être rechargé lorsque l'engin volant (20) a atterri.

5. Système de revêtement (10) selon l'une des revendications précédentes comportant la caractéristique supplémentaire suivante :
a. l'applicateur (42) est pourvu d'un dispositif de guidage (43) pour réduire ainsi les perturbations d'un jet de pulvérisation et de revêtement émis par l'applicateur en raison de turbulences dues aux rotors.

6. Système de revêtement (10) selon la revendication 5 comportant la caractéristique supplémentaire suivante :
a. le dispositif de guidage (43) est conçu sous la forme d'une structure entourant un axe de distribution (42B) de l'applicateur (42), laquelle est de préférence une structure s'évasant dans la direction de distribution à la manière d'un entonnoir s'ouvrant dans la direction de distribution.

7. Système de revêtement (10) selon l'une des revendications précédentes comportant la caractéristique suivante :
a. l'applicateur (42) est apte à pivoter par rapport au fuselage (22) de l'engin volant (20),
en particulier de préférence comportant la caractéristique supplémentaire suivante :
b. l'applicateur (42) est apte à pivoter sur un axe de pivotement horizontal (42A), de préférence d'un angle d'au moins 60°, en particulier de préférence d'au moins 80°, de sorte que l'applicateur (42) peut être pivoté vers le bas sensiblement entre une première orientation pour la distribution à peu près horizontale d'un jet de pulvérisation et une deuxième orientation pour la distribution à peu près verticale d'un jet de pulvérisation.

8. Système de revêtement (10) selon l'une des revendications précédentes comportant la caractéristique suivante :
a. l'engin volant (20) est conçu avec une unité de détection d'épaisseur de couche (72) destinée à mesurer sans contact une couche de laque appliquée,
en particulier de préférence comportant l'une au moins des caractéristiques supplémentaires suivantes :
b. l'unité de détection d'épaisseur de couche (72) fonctionne selon le principe de mesure du contrôle par ultrasons, de la mesure laser ou de la mesure infrarouge et/ou
c. l'unité de détection d'épaisseur de couche fait partie d'un module d'échange de capteurs qui peut être accouplé au fuselage de l'engin volant, et désaccouplé de celui-ci, au moyen d'un dispositif d'accouplement à commande automatique, le dispositif d'accouplement correspondant étant de préférence conçu de manière correspondante à celui du module réservoir ou du module applicateur de sorte que le module de changement de capteur puisse être accouplé au fuselage de l'engin volant à la place du module réservoir et à la place du module applicateur.

9. Système de revêtement (10) selon l'une des revendications précédentes comportant la caractéristique supplémentaire suivante :
a. l'engin volant (20) comporte un compensateur d'application (47) destiné à compenser une impulsion provoquée par la distribution de liquide de revêtement, de préférence comportant l'une des caractéristiques suivantes :
b. le compensateur d'application (47) est conçu à la manière d'un rotor supplémentaire (48) dont l'axe de rotation (48A) a une orientation s'écartant d'une direction verticale (2), ou
c. le compensateur d'application est conçu sous la forme d'un dispositif de guidage qui est déplaçable, notamment pivotant, par rapport au fuselage, et qui dévie le flux d'air s'écoulant vers le rotor ou le flux d'air sortant du rotor, par déplacement relatif par rapport au flux d'air d'au moins un des rotors, pour générer une contre-impulsion.

10. Système de revêtement (10) selon l'une des revendications précédentes comportant l'une des deux caractéristiques suivantes :
a. le mécanisme de positionnement est conçu comme un mécanisme de positionnement actif et comporte au moins un actionneur à commande électrique qui est conçu pour déplacer l'engin volant après l'atterrissage, ou
b. le mécanisme de positionnement (102) est conçu comme un mécanisme de positionnement passif et comporte des surfaces de guidage (104) inclinées par rapport à une direction verticale et destinées à déplacer horizontalement l'engin volant (20) lors de l'atterrissage.

11. Système de revêtement selon l'une des revendications précédentes comportant la caractéristique suivante :
a. le mécanisme de fixation (110) comporte un élément de fixation (112) déplaçable automatiquement qui, pour fixer l'engin volant, peut être amené en contact avec une surface homologue (92) sur l'engin volant.

12. Système de revêtement selon l'une des revendications précédentes comportant la caractéristique supplémentaire suivante :
a. une portion (120) est prévue à la station de base, laquelle portion, lorsque l'engin volant (20) a atterri, coopère avec au moins un dispositif d'accouplement (34, 44, 54) de manière à pouvoir passer de l'état d'accouplement à l'état de libération.

13. Système de revêtement selon l'une des revendications précédentes comportant l'une au moins des caractéristiques supplémentaires suivantes :
a. la pluralité de modules interchangeables sont disposés sur la station de base (100) dans un magasin mobile (132), de préférence dans un magasin revolver, et/ou
b. la station de base (100) comporte un mécanisme de chauffage destiné à chauffer le contenu de modules réservoirs interchangeables.

14. Système de revêtement selon l'une des revendications précédentes comportant l'une au moins des caractéristiques suivantes :
a. l'engin volant (20) comporte au moins trois rotors descendants, en particulier quatre rotors descendants (quadricoptère), six rotors descendants (hexacoptère) ou huit rotors descendants (octocoptère), et/ou
b. l'engin volant (20) comporte un système de mesure (38) destiné à mesurer la quantité de liquide distribué du réservoir ou la quantité de liquide encore dans le réservoir, de préférence les valeurs mesurées étant prises en compte par le logiciel d'une commande d'assiette au moyen de ce système de mesure, et/ou
c. le réservoir (32) est conçu comme un réservoir thermiquement isolé (32) et comporte pour cela une paroi extérieure isolée, et/ou
d. l'engin volant (20) comporte un dispositif de chauffage (28) destiné à chauffer le revêtement avant distribution et/ou
e. l'applicateur (42) comporte une ouverture de distribution (42C) par laquelle le liquide de revêtement est délivré dans l'environnement, l'applicateur (42) étant conçu ou disposé de telle sorte que l'ouverture de distribution (42C) et/ou un dispositif de guidage (43) de l'applicateur (42) soit espacé des rotors (24) d'au moins 20 cm par rapport à un plan horizontal, et/ou
f. l'engin volant comporte au moins une caméra (74) qui est orientée ou peut être orientée horizontalement pour capturer des surfaces à revêtir, une régulation de commande de position de l'engin volant (20) et/ou une commande du processus de distribution étant effectuées par un appareil de commande (80) avec prise en compte des données de sortie de cette caméra (74).
